# EUROPEAN PATENT APPLICATION

(11) **EP 4 757 053 A1**
(43) Date of publication of application: **10.06.2026**
(21) Application number: 24925016.8
(22) Date of filing: 02.12.2024
(51) Int. Cl.: H01M 50/566, H01M 50/553, H01M 50/559, H01M 50/188, H01M 50/552

(54) **BATTERY CELL AND BATTERY PACK AND VEHICLE INCLUDING SAME**

(30) Priority: 15.02.2024 KR 20240021860; 24.05.2024 KR 20240067973
(71) Applicant: LG Energy Solution, Ltd., Seoul 07335 (KR)
(72) Inventor: OH, Kyung-Teak, Daejeon 34122 (KR); JEONG, Seok-Hun, Daejeon 34122 (KR)
(74) Representative: Goddar, Heinz J.
(86) International application number: PCT/KR2024/019474
(87) International publication number: WO 2025/173874

(57) **Abstract**

A battery cell according to an embodiment of the present disclosure includes an electrode assembly in which a first electrode, a second electrode, and a separator disposed between the first electrode and the second electrode are wound around a winding axis to define a core and an outer circumferential surface, the first electrode including a first uncoated portion that is not coated with an active material layer along a winding direction, a housing including an open portion on one side and configured to accommodate the electrode assembly through the open portion, a current collector including an edge portion disposed on the electrode assembly, an uncoated portion coupling portion extending inward from the edge portion and coupled to the first uncoated portion, and a terminal coupling portion spaced apart from the uncoated portion coupling portion, located at a central portion, and exposed to outside of the housing, a terminal extending through a closed portion of the housing located opposite to the open portion to be exposed to outside of the housing, and coupled to the terminal coupling portion, and a terminal block configured to be coupled to an inner side of the current collector.

## Description

### TECHNICAL FIELD

The present disclosure relates to a battery cell, and a battery pack and a vehicle including the same. This application is based on and claims priority from Korean Patent Application Nos. 10-2024-0021860 and 10-2024-0067973, respectively filed on February 15, 2024 and May 24, 2024, with the Korean Intellectual Property Office, the disclosures of which are incorporated herein in their entirety by reference.

### BACKGROUND ART

Secondary batteries have high applicability according to product groups and electrical characteristics such as high energy density, and thus, are commonly applied not only to mobile devices but also to electric vehicles (EVs) or hybrid vehicles (HEVs) driven by electric power sources. Because secondary batteries may radically reduce the use of fossil fuel and do not generate any by-products that come with energy consumption, the secondary batteries are gaining attention as a new alternative energy source for improving eco-friendliness and energy efficiency.

Types of secondary batteries that are currently widely used include lithium-ion batteries, lithium polymer batteries, nickel cadmium batteries, nickel hydride batteries, and nickel zinc batteries. An operating voltage of a unit secondary battery cell, that is, a unit battery cell, ranges from about 2.5 V to about 4.5 V. Accordingly, when a higher output voltage is required, a battery pack may be configured by connecting a plurality of battery cells in series. Also, a battery pack may be configured by connecting a plurality of battery cells in parallel according to charge/discharge capacity required for the battery pack. Accordingly, the number of battery cells included in a battery pack may be set in various ways according to a required output voltage and/or charge/discharge capacity.

Conventional cylindrical battery cells are manufactured by welding a positive electrode rivet terminal to a positive electrode current collecting plate to which an electrode assembly is welded through cathode rivet welding (CRW). During this CRW, a welding horn tip is inserted into a hole formed at the winding center of the electrode assembly to weld the rivet terminal and the positive electrode current collecting plate. In this case, as the CRW process is performed, various restrictions arise in the development of secondary batteries. For example, due to spatters generated during the CRW, the issue of separator damage and battery capacity and lifespan reduction occurs. Also, because it is difficult to reduce a diameter of the CRW welding horn tip, there is a limit to increasing the energy density of the electrode assembly.

### DISCLOSURE

### Technical Problem

The present disclosure is directed to preventing welding spatters from being introduced into a battery housing by performing terminal welding outside the battery housing.

The present disclosure is also directed to minimizing damage to a separator and improving a lifespan of a battery.

In another aspect, the present disclosure is also directed to improving energy density by increasing the number of windings of an electrode assembly.

However, the technical purpose to be solved by the present disclosure are not limited to the above, and other objects not mentioned herein will be clearly understood by one of ordinary skill in the art from the following disclosure.

### Technical Solution

A battery cell according to an embodiment of the present disclosure for solving the above described problem includes: an electrode assembly in which a first electrode, a second electrode, and a separator disposed between the first electrode and the second electrode are wound around a winding axis to define a core and an outer circumferential surface, the first electrode including a first uncoated portion that is not coated with an active material layer along a winding direction; a housing including an open portion on one side and configured to accommodate the electrode assembly through the open portion; a current collector including an edge portion disposed on the electrode assembly, an uncoated portion coupling portion extending inward from the edge portion and coupled to the first uncoated portion, and a terminal coupling portion spaced apart from the uncoated portion coupling portion, located at a central portion, and exposed to outside of the housing; a terminal extending through a closed portion of the housing located opposite to the open portion to be exposed to outside of the housing, and coupled to the terminal coupling portion; and a terminal block configured to be coupled to an inner side of the current collector.

In one aspect of the present disclosure, the current collector, the terminal, and the terminal block may be configured to be welded to each other outside the housing.

A coupling surface where the current collector, the terminal, and the terminal block are coupled to each other may constitute a flat portion parallel to the closed portion of the housing.

In another aspect of the present disclosure, the terminal coupling portion may include a first part extending parallel to the closed portion, and a second part extending perpendicular to the first part from the first part toward the outside of the housing.

The second part may extend in a direction parallel to a direction of the winding axis of the electrode assembly.

In still another aspect of the present disclosure, the second part may have a hollow pipe shape.

Also, an injection hole concentric with the second part and having a diameter less than or equal to an inner diameter of the second part may be formed in the first part.

Also, a support portion on which a bottom surface of the terminal block is seated may be formed on a bottom portion of the second part.

In one aspect of the present disclosure, an outer diameter of the terminal block may be same as an inner diameter of the second part.

In the present disclosure, the terminal block may have a cylindrical shape and have an upper outer circumference chamfered to form a tapered surface.

In the present disclosure, a welding bead may be formed along the second part on a coupling surface where the current collector, the terminal, and the terminal block are coupled to each other.

In another aspect of the present disclosure, the terminal may pass through a central portion of the closed portion.

In still another aspect of the present disclosure, the terminal may include: a terminal exposed portion exposed to the outside of the housing; a terminal insertion portion extending through the closed portion of the housing and located inside the housing; and a terminal connection portion connecting the terminal exposed portion to the terminal insertion portion and extending through the housing.

For example, the terminal connection portion may have a hollow pipe shape.

An outer diameter of the second part may be less than or equal to an inner diameter of the terminal connection portion.

In one aspect of the present disclosure, the battery cell may include an insulating gasket provided on the closed portion of the housing and disposed between the housing and the terminal.

The insulating gasket may include: a gasket exposed portion disposed between the terminal exposed portion and the housing; and a gasket insertion portion disposed between the terminal insertion portion and the housing.

The present disclosure provides a battery pack including at least one battery cell according to the present disclosure.

The present disclosure provides a vehicle including at least one battery pack according to the present disclosure.

### Advantageous Effects

According to the present disclosure, because terminal welding is performed outside a battery housing, welding spatters may be prevented from being introduced into the battery housing.

Also, according to the present disclosure, damage to a separator may be minimized and a lifespan of a battery may be improved.

Also, in another aspect, according to the present disclosure, because the number of windings of an electrode assembly is increased, energy density may be improved.

However, technical effects of the present disclosure are not limited thereto, and other unmentioned technical effects will be apparent to one of ordinary skill in the art from the following description.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a view for describing a battery cell according to an embodiment of the present disclosure.
FIG. 2 is a longitudinal sectional view illustrating the battery cell of FIG. 1.
FIG. 3 is an enlarged cross-sectional view illustrating an upper portion of the battery cell of FIG. 1, which is a view for describing a process of coupling a terminal block to a current collector.
FIG. 4 is an enlarged cross-sectional view illustrating an upper portion of the battery cell of FIG. 1, which is a view for describing a state where a terminal block and a current collector are coupled to each other.
FIG. 5 is a view for describing a current collector according to an embodiment of the present disclosure.
FIG. 6 is a view for describing a current collector according to another embodiment of the present disclosure.
FIG. 7 is a view for describing a current collector according to still another embodiment of the present disclosure.
FIG. 8 is a view for describing a terminal according to an embodiment of the present disclosure.
FIG. 9 is a view for describing a terminal block according to an embodiment of the present disclosure.
FIG. 10 is an enlarged cross-sectional view illustrating an upper portion of the battery cell of FIG. 1.
FIG. 11 is an enlarged view illustrating a part of FIG. 10.
FIG. 12 is a view for describing a portion of a battery cell according to an embodiment of the present disclosure to which welding is applied.
FIG. 13 is a view for describing a portion of a battery cell according to another embodiment of the present disclosure to which welding is applied.
FIG. 14 is a top view of a battery cell for describing a state where welding is performed in the battery cell according to another embodiment of the present disclosure.
FIG. 15 is a view for describing a terminal block according to another embodiment of the present disclosure.
FIG. 16 illustrates a state where the terminal block of FIG. 15 is inserted into a second part of the current collector of FIG. 7.
FIG. 17 is a view for describing a battery pack including the battery cell of FIG. 1.
FIG. 18 is a view for describing a vehicle including the battery pack of FIG. 17.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the present disclosure, so it should be understood that other equivalents and modifications could be made thereto without departing from the scope of the present disclosure.

In addition, in order to help understand the present disclosure, the accompanying drawings are not drawn to scale, but dimensions of some components may be exaggerated. Also, the same reference numerals may be assigned to the same components in different embodiments.

When it is explained that two objects are identical, this means that these objects are 'substantially identical'. Accordingly, the substantially identical objects may include a deviation considered low in the art, for example, a deviation of less than 5%. Also, when it is explained that certain parameters are uniform in a certain region, this may mean that the parameters are uniform in terms of an average.

It will be understood that, although the terms "first", "second", etc. may be used herein to describe various elements, these elements should not be limited by these terms. These terms are only used to distinguish one element from another element. Thus, for example, a first element could be termed a second element without departing from the scope of the present disclosure.

As used herein, the singular forms are intended to include the plural forms as well, unless the context clearly indicates otherwise.

Hereinafter, it will be understood that an element is referred to as being "above (or below)" or "on (or under)" another, it may be on an upper surface (or a lower surface) of the other element and intervening elements may be present between the element and the other element on (or under) the element.

If components are described as "connected", "coupled", or "linked" to another component, it may mean that the components are directly "connected", "coupled", or "linked" or are indirectly "connected", "coupled", or "linked" via a third component.

In the specification, unless the context clearly indicates otherwise, "A and/or B" represents either A or B or both, and "C to D" represents C or more and D or less.

For convenience of description, in the specification, a direction that follows a lengthwise direction of a winding axis of an electrode assembly wound in a jelly-roll shape is referred to as an axial direction Z. Additionally, a direction around the winding axis is referred to as a circumferential direction X. Additionally, a direction toward or away from the winding axis is referred to as a radial direction. In particular, a direction toward the winding axis is referred to as a centripetal direction, and a direction that faces away from the winding axis is referred to as a centrifugal direction.

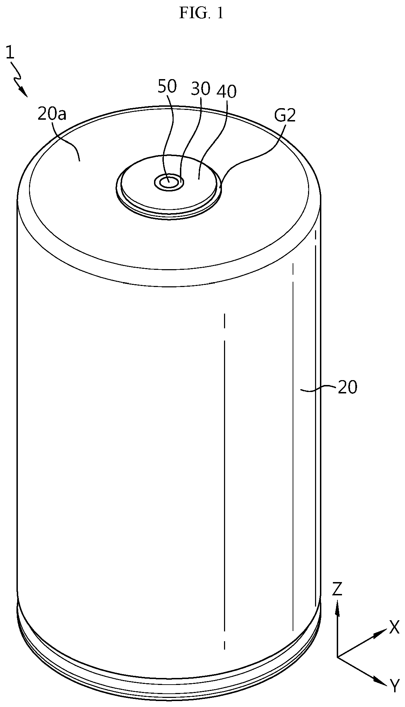

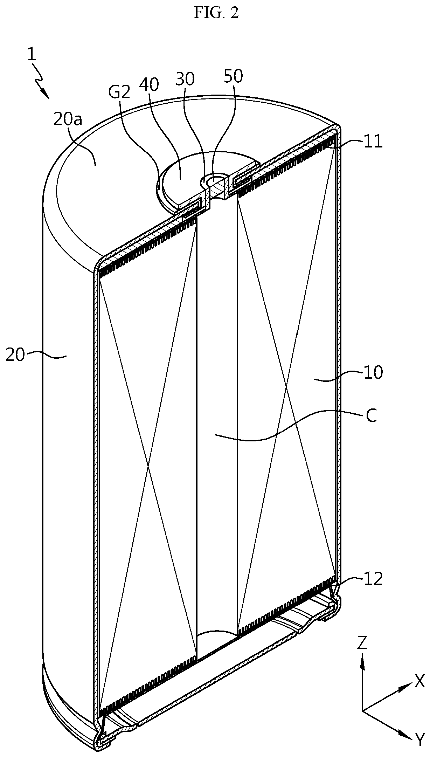

FIG. 1 is a view for describing a battery cell according to an embodiment of the present disclosure. FIG. 2 is a longitudinal sectional view illustrating the battery cell of FIG. 1.

Referring to FIGS. 1 and 2, a battery cell 1 according to an embodiment of the present disclosure may be, for example, a cylindrical battery cell 1. The cylindrical battery cell 1 includes an electrode assembly 10, a housing 20, a current collector 30, a terminal 40, and a terminal block 50. The cylindrical battery cell 1 may further include an insulating gasket G2 and/or an insulator 60, in addition to the above components. The present disclosure is not limited to a shape of a battery, and may be applied to batteries of other shapes, for example, a prismatic battery.

The electrode assembly 10 includes a first electrode having a first polarity, a second electrode having a second polarity, and a separator disposed between the first electrode and the second electrode. The first electrode corresponds to a positive electrode or a negative electrode, and the second electrode corresponds to an electrode having a polarity opposite to that of the first electrode.

The electrode assembly 10 may have, for example, a jelly-roll structure. That is, the electrode assembly 10 may be manufactured by winding a stack, formed by stacking a first electrode current collector and a second current collector each having a sheet shape at least once with a separator therebetween, in one direction with respect to a winding center C. In this case, an additional separator may be provided on an outer circumferential surface of the electrode assembly 10 for insulation from the housing 20. Any structure of a wound electrode assembly known in the art may be applied to the present disclosure without limitation.

The first electrode includes a first electrode current collector and a first electrode active material coated on one surface or both surfaces of the first electrode current collector. The first electrode includes a first uncoated portion that is not coated with an active material layer along a winding direction. That is, there is an uncoated portion that is not coated with the first electrode active material on one end of the first electrode current collector in a width direction (direction parallel to a Z axis) of the first electrode current collector. The uncoated portion functioning as a first electrode tab is referred to as a first uncoated portion 11. The first uncoated portion 11 is provided in an upper portion of the electrode assembly 10 accommodated in the housing 20 in a height direction (direction parallel to the Z axis) of the electrode assembly 10. That is, the first electrode current collector includes the first uncoated portion 11 that is not coated with an active material layer on a long side end and is exposed to the outside of the separator, and a part of the first uncoated portion 11 is used as an electrode tab. The first uncoated portion 11 may be, for example, a positive electrode tab. In this case, the first electrode is a positive electrode plate.

At least a part of the first uncoated portion 11 may include a plurality of segments divided in the winding direction of the electrode assembly 10. In this case, the plurality of segments may be bent along a radial direction of the electrode assembly 10. The plurality of bent segments may overlap in multiple layers. In this case, an uncoated portion coupling portion 32 may be coupled to a region where the plurality of segments overlap in multiple layers.

The second electrode includes a second electrode current collector and a second electrode active material coated on one surface or both surfaces of the second electrode current collector. There is an uncoated portion that is not coated with the second electrode active material on the other end of the second electrode current assembly in a width direction (direction parallel to the Z axis) of the second electrode current collector. The uncoated portion functioning as a second electrode tab is referred to as a second uncoated portion 12. The second uncoated portion 12 is provided in a lower portion of the electrode assembly 10 accommodated in the housing 20 in the height direction (direction parallel to the z axis) of the electrode assembly 10. That is, the second electrode current collector includes the second uncoated portion 12 that is not coated with an active material layer on a long side end and is exposed to the outside of the separator, and at least a part of the second uncoated portion 12 is used as an electrode tab. The second uncoated portion 12 may be, for example, a negative electrode tab. In this case, the second electrode is a negative electrode plate.

At least a part of the second uncoated portion 12 may include a plurality of segments divided in the winding direction of the electrode assembly 10. In this case, the plurality of segments may be bent along the radial direction of the electrode assembly 10. The plurality of bent segments may overlap in multiple layers.

The first uncoated portion 11 and the second uncoated portion 12 extend in opposite directions along a height direction (direction parallel to the Z axis) of the cylindrical battery cell 1. The first uncoated portion 11 extends toward a closed portion of the housing 20, and the second uncoated portion 12 extends toward an open portion of the housing 20.

In the present disclosure, a positive electrode active material coated on a positive electrode plate and a negative electrode active material coated on a negative electrode plate may be any type of active material, provided that the active material is well known in the art. Preferably, the battery cell 1 may be, for example, a cylindrical secondary battery having a form factor ratio (a ratio of a height to a diameter) greater than about 0.4. Preferably, a diameter of the cylindrical secondary battery may be 40 mm to 50 mm, and a height of the cylindrical secondary battery may be 60 mm to 130 mm. A form factor of the battery cell 1 may be, for example, 46110, 4875, 48110, 4880, or 4680.

Referring to FIGS. 1 and 2, the housing 20 is a receiving body of a substantially cylindrical shape having an open portion on one side thereof, and includes a conductive material such as a metal. In the illustrated example, the open portion is formed at a lower end of the housing 20 in the Z axis direction. For example, steel, stainless steel (SUS) or nickel-plated iron may be applied as a material of the housing 20. A top surface located opposite to the open portion is referred to as a closed portion. In the illustrated example, the closed portion is formed at an upper end of the housing 20 in the Z axis direction. A side wall portion and the closed portion of the housing 20 may be integrally formed. Alternatively, the side wall portion and the closed portion of the housing 20 may be individually provided and coupled to each other by using welding or the like. A top surface (surface parallel to an X-Y plane) of the housing 20, that is, an outer surface 20a of the closed portion, may have a substantially flat shape. The housing 20 accommodates the electrode assembly 10 through the open portion formed on one side, and also accommodates an electrolyte therein.

The housing 20 is electrically connected to the electrode assembly 10. The housing 20 is electrically connected to, for example, the second uncoated portion 12 of the electrode assembly 10. In this case, the housing 20 has the same polarity as the second uncoated portion 12.

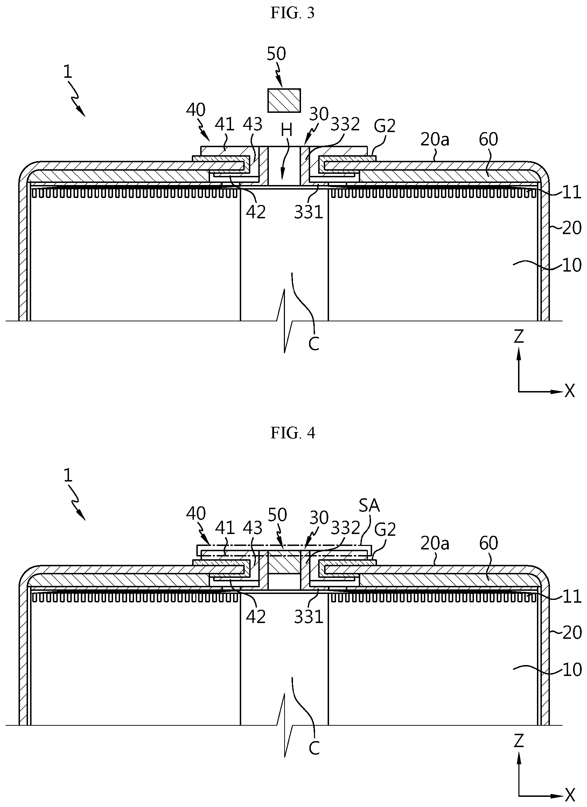

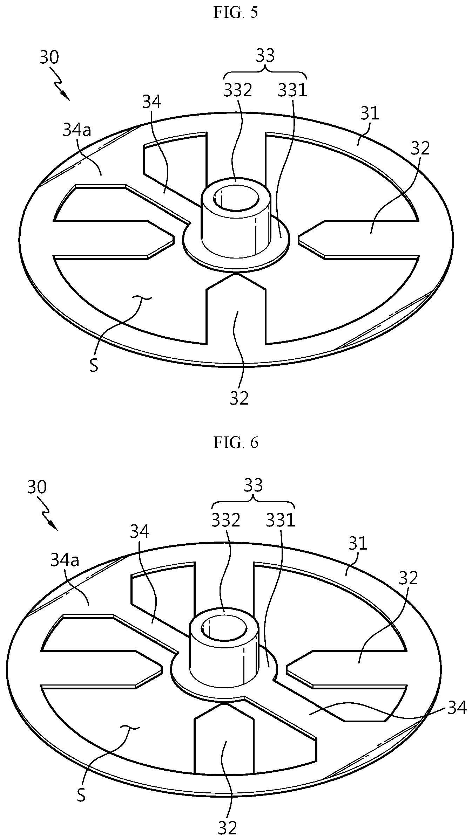

FIG. 3 is an enlarged cross-sectional view illustrating an upper portion of the battery cell of FIG. 1, which is a view for describing a process of coupling a terminal block to a current collector. FIG. 4 is an enlarged cross-sectional view illustrating an upper portion of the battery cell of FIG. 1, which is a view for describing a state where the terminal block and the current collector are coupled to each other. FIG. 5 is a view for describing a current collector according to an embodiment of the present disclosure. FIG. 6 is a view for describing a current collector according to another embodiment of the present disclosure.

Referring to FIGS. 3 and 4, the current collector 30 is coupled to an upper portion of the electrode assembly 10. The current collector 30 is formed of a conductive metal material and is connected to the first uncoated portion 11. The current collector 30 may be coupled to a coupling surface formed by bending an end of the first uncoated portion 11 in a direction parallel to the current collector 30.

Referring to FIGS. 3 and 4, the current collector 30 may be coupled to an upper portion of the electrode assembly 10. Also, the current collector 30 may be coupled to the terminal 40. That is, the current collector 30 electrically connects the first uncoated portion 11 of the electrode assembly 10 and the terminal 40 to each other. The current collector 30 is formed of a conductive metal material. The current collector 30 may be formed of the same metal as that of the first electrode current collector or may be formed of a material that is easily welded to the first electrode current collector. For example, the current collector 30 may be formed of aluminum (Al) or an aluminum alloy, nickel or a nickel alloy, iron, SUS, or a composite material thereof.

Referring to FIGS. 5 and 6 together with FIGS. 3 and 4, the current collector 30 includes an edge portion 31, the uncoated portion coupling portion 32, and a terminal coupling portion 33. The edge portion 31 is disposed on the electrode assembly 10, and may have a substantially rim shape in which an empty space S is formed. Although the edge portion 31 has a substantially circular rim shape in the drawings, the present disclosure is not limited thereto. The edge portion 31 may have a substantially quadrangular rim shape, hexagonal rim shape, octagonal rim shape, or another rim shape, unlike in the drawings. The uncoated portion coupling portion 32 may extend inward from the edge portion 31 and may be coupled to the first uncoated portion 11.

The terminal coupling portion 33 is spaced apart from the uncoated portion coupling portion 32 and is located inside the edge portion 31. The terminal coupling portion 33 may be coupled to the terminal 40 and/or the terminal block 50 described below by using welding. The terminal coupling portion 33 may be located, for example, at a substantially central portion of the inner space surrounded by the edge portion 31. The terminal coupling portion 33 may be disposed at a position corresponding to a hole formed at the winding center C of the electrode assembly 10. The terminal coupling portion 33 is formed to be exposed to the outside of the housing 20.

Referring to FIGS. 1 to 4, the terminal 40 is formed of a conductive metal material. For example, aluminum may be used as a material of the terminal 40. When a material of the terminal 40 is aluminum, rivet processing described below may be facilitated, and aluminum of 10 series having relatively low electrical resistance may be applied. The terminal 40 extends through a closed portion of the housing 20, that is, a surface (surface parallel to the X-Y plane) located opposite to an open portion of the housing 20. For example, the terminal 40 may pass through a central portion of the closed portion. The terminal 40 is electrically connected to, for example, the first uncoated portion 11 of the electrode assembly 10. In this case, the terminal 40 has a first polarity. Accordingly, the terminal 40 may function as a first electrode terminal in the cylindrical battery cell 1 of the present disclosure. When the terminal 40 has the first polarity, the terminal 40 is electrically insulated from the housing 20 having a second polarity. The terminal 40 is coupled to the terminal coupling portion 33 of the current collector 30 in an area exposed to the outside of the housing 20.

In the present disclosure, the outer surface 20a of the closed portion of the housing 20 may function as a second electrode terminal. The battery cell 1 according to the present disclosure has a structure in which the terminal 40 exposed through the closed portion of the housing 20 may be used as a first electrode terminal and a remaining portion of the closed portion except for a portion occupied by the terminal 40 may be used as a second electrode terminal. Accordingly, in the battery cell 1 according to the present disclosure, when a plurality of battery cells 1 are electrically connected, both positive and negative electrodes may be connected in one direction, thereby simplifying an electrical connection structure. Also, because the battery cell 1 has a structure in which most of the closed portion of the housing 20 may be used as an electrode terminal, a sufficient area for welding components for electrical connection may be secured.

Referring to FIGS. 3 and 4, the terminal block 50 may be a structure having a substantially cylindrical shape. The terminal block 50 may also be formed of a conductive metal material. A material of the terminal block 50 may be the same as, for example, that of the terminal 40. For example, aluminum may be used.

Referring to FIGS. 3 and 4, the terminal block 50 may be coupled to an inner side of the current collector 30. That is, a part of the current collector 30 may be exposed to the outside of the housing 20, and the current collector 30 at the exposed position may have a substantially cylindrical shape with an empty inner space. In this case, the terminal block 50 may be inserted into the empty inner space. That is, an outer diameter of the terminal block 50 may be the same as an inner diameter of the terminal coupling portion 33 of the current collector 30. In more detail, an outer diameter of the terminal block 50 may be the same as an inner diameter of a second part 332 of the current collector 30 described below. Alternatively, an outer diameter of the terminal block 50 may be slightly greater than an inner diameter of the terminal coupling portion 33. In this case, the terminal block 50 may be forcibly fitted into the terminal coupling portion 33 of the current collector 30. Accordingly, the terminal block 50 inserted into the empty inner space of the terminal coupling portion 33 may be fixed at a certain position without moving in a vertical direction. Although the terminal coupling portion 33 and the terminal block 50 are coupled to each other by using welding later, because the terminal block 50 does not move in a winding axis direction even before being welded, smooth welding may be performed.

According to the structure of the present disclosure as described above, all of the current collector 30, the terminal 40, and the terminal block 50 may be exposed to the outside of the housing 20. Accordingly, the current collector 30, the terminal 40, and the terminal block 50 may be welded to each other outside the housing 20. Because the terminal block 50 is coupled to the terminal coupling portion 33 of the current collector 30, the terminal 40, the current collector 30, and the terminal block 50 may be electrically connected.

For example, in a structure of a conventional battery cell, a welding horn tip had to be inserted into a hole formed at a winding center of an electrode assembly to weld a current collector and a terminal to each other. And, in the conventional battery cell, a separator was damaged, or battery capacity and lifespan were reduced due to spatters generated during welding. Also, because it is difficult to reduce a diameter of the welding horn tip during welding, a diameter of the hole formed at the winding center of the electrode assembly had to be secured to some extent, and thus, there was a limit to increasing energy density.

However, the current collector 30 and the terminal 40 of the battery cell 1 according to an embodiment of the present disclosure have a structure different from that of the current collector and the terminal of the conventional battery cell. According to the structure of the present disclosure, the current collector 30, the terminal 40, and the terminal block 50 may be welded to each other outside the housing 20. Because welding is possible outside the housing 20 due to a structure change of the current collector 30 and the terminal 40, even when spatters are generated during welding, the spatters are not introduced into the battery, thereby preventing damage to the separator. Also, the issue of battery capacity and lifespan reduction may be solved. Furthermore, according to the structure of the present disclosure, because the current collector 30, the terminal 40, and the terminal block 50 are welded outside the housing 20, there is no need to insert a welding horn tip into the electrode assembly 10, and thus, a diameter of a hole formed at the winding center C of the electrode assembly 10 may be reduced, thereby increasing the number of windings of the electrode assembly 10 and improving energy density.

Also, according to the present disclosure, because the current collector 30, the terminal 40, and the terminal block 50 are welded outside the housing 20, various welding methods such as laser welding and ultrasonic welding may be used.

When ultrasonic welding is used, a horn should contact a contact portion and should vibrate. In a conventional method of performing welding inside a housing, because a horn should have a length equal to or greater than a length of a hole formed at a winding center, there is a high risk of breaking the horn when strong vibration occurs in a straight direction or a zigzag direction. Considering this, a method in which a horn rotates may be applied, but even in this case, many burrs are generated and it is difficult to identify the presence or absence of a partially uncoupled portion. Furthermore, in the case of ultrasonic welding, a problem caused by a foreign material (metal chips) generated during welding may also occur. In the present disclosure, because welding is performed outside the housing 20, ultrasonic welding may be performed by using a short horn, strong vibration may be applied, welding may be performed without an uncoupled portion by observing an area that is coupled by welding from the outside, and there is no problem caused by a foreign material generated during welding and introduced into the battery.

In a conventional method of performing laser welding inside a housing, an optical system of a laser welding device should be configured so that a laser beam does not deviate from a hole formed at a winding center, laser focusing should be as long as a length of the hole formed at the winding center, and a laser beam should pass through the hole formed at the winding center, making it difficult to prevent damage to a peripheral electrode assembly during a welding process. In the present disclosure, because welding is performed outside the housing 20, there is no need to specially change or upgrade an optical system of a laser welding device, and because a laser beam does not pass around the electrode assembly 10, there is no damage to the electrode assembly 10. Accordingly, laser welding with good welding strength may be conveniently used to couple the current collector 30, the terminal 40, and the terminal block 50. In the present disclosure, because deformation caused by contact pressure welding such as resistance welding is prevented by applying laser welding, not only quality and performance may be guaranteed but also product yield may be improved. Because there is no need to replace a welding rod or horn according to laser welding, production efficiency may be improved, production costs may be reduced, and a manufacturing process time may be reduced. Also, laser welding may have higher bonding strength than ultrasonic welding and may ensure higher welding performance and quality uniformity than resistance welding.

In another aspect of the present disclosure, a surface SA (see FIG. 4) where the current collector 30, the terminal block 50, and the terminal 40 are coupled to each other may constitute a flat portion parallel to the closed portion of the housing 20. The surface where the current collector 30, the terminal block 50, and the terminal 40 are coupled to each other may function as a positive electrode terminal of the battery. Accordingly, it is preferable that the coupling surface is flat. For example, when the current collector 30, the terminal 40, and the terminal block 50 are welded to each other outside the housing 20, a welding bead W is formed. In this case, because the welding bead W is formed when a metal is melted and then hardened again, the welding bead W may not have a uniformly flat shape. Accordingly, in some cases, after the current collector 30, the terminal block 50, and the terminal 40 are welded to each other, the coupling surface of the current collector 30, the terminal block 50, and the terminal 40 may need to be flattened. In conclusion, the surface where the current collector 30, the terminal block 50, and the terminal 40 are coupled to each other may constitute a flat portion parallel to the closed portion of the housing 20. Here, 'parallel' means substantially parallel when observed with the naked eye. 'Flat' means something that is flat.

In still another aspect of the present disclosure, referring to FIG. 5, the uncoated portion coupling portion 32 and the terminal coupling portion 33 are spaced apart from each other without being directly connected to each other, and are electrically connected to each other by the edge portion 31. As such, because the current collector 30 according to an embodiment of the present disclosure has a structure in which the uncoated portion coupling portion 32 and the terminal coupling portion 33 are connected to each other through the edge portion 31 without being directly connected to each other, when impact and/or vibration occurs in the cylindrical battery cell 1, impact applied to a coupling portion between the uncoated portion coupling portion 32 and the first uncoated portion 11 and a coupling portion between the terminal coupling portion 33 and the terminal 40 may be distributed. Accordingly, the current collector 30 of the present disclosure may minimize or prevent damage to a welding portion due to external impact. The current collector 30 of the present disclosure has a structure in which stress may be concentrated on a connection part between the edge portion 31 and the terminal coupling portion 33 when external impact is applied into the battery cell 1 through the terminal 40. However, the connection part is not a part where a welding portion for coupling components is formed. Accordingly, in the present disclosure, product defects due to damage to the welding portion caused by external impact may be effectively prevented.

In still another aspect of the present disclosure, referring to FIG. 6, the current collector 30 may further include a connection portion 34 that extends inward from the edge portion 31 and is connected to the terminal coupling portion 33. In the current collector 30, the uncoated portion coupling portion 32 and the terminal coupling portion 33 may be indirectly connected by the connection portion 34 without being directly connected to each other. An extension direction of the uncoated portion coupling portion 32 and an extension direction of the connection portion 34 may not be parallel to each other. The connection portion 34 may extend in a substantially radial direction from a substantially central portion of the terminal coupling portion 33 and may be connected to the edge portion 31.

The connection portion 34 may include a tapered portion 34a whose width decreases from an inner surface of the edge portion 31 toward the terminal coupling portion 33. When the tapered portion 34a is provided, the rigidity of a component at a connection part between the connection portion 34 and the edge portion 31 may be improved.

Referring to FIG. 6, a plurality of connection portions 34 may be provided. The number of connection portions 34 may be determined by considering a resistance level required for the cylindrical battery cell 1, an aperture ratio of the current collector 30, etc. Each of the plurality of connection portions 34 may be disposed between one pair of uncoated portion coupling portions 32 adjacent to each other. The plurality of connection portions 34 may be regularly arranged along an extension direction of the edge portion 31. For example, the plurality of connection portions 34 may be arranged at substantially equal intervals along the extension direction of the edge portion 31. The number of the connection portions 34 may be, for example, 1 or 2. This is to rapidly cut off overcurrent. When the number of connection portions 34 is too large, the flow of current may be distributed, making it difficult for a fusing function to operate normally. In order to ensure the rigidity of the current collector 30 as well, the number of connection portions 34 may be 2.

In one aspect of the present disclosure, the terminal coupling portion 33 may include a first part 331 and the second part 332.

In more detail, referring to FIGS. 5 and 6, the terminal coupling portion 33 may include the first part 331 extending parallel to the closed portion; and the second part 332 extending perpendicular to the first part 331 from the first part 331 toward the outside of the housing 20.

When the current collector 30 has a substantially flat plate shape, the first part 331 may correspond to a part of the plate shape. That is, the first part 331 may be formed to have a plate shape parallel to the closed portion.

On the other hand, the second part 332 may be formed to be perpendicular to the first part 331. For example, the second part 332 may have a structure extending upward from the first part 331. That is, the second part 332 may extend in a direction parallel to the winding axis direction of the electrode assembly 10. In more detail, the second part 332 may have a substantially pipe shape extending upward from the first part 331. That is, the second part 332 may be formed to have a hollow pipe shape. In other words, the second part 332 may be formed in a substantially cylindrical shape with an empty inner space. However, a shape of the second part 332 is not limited thereto, and any hollow shape extending in the winding axis direction may be included in the scope of the present disclosure.

Referring back to FIGS. 5 and 6, the terminal block 50 may be inserted into an empty inner space of the second part 332. On the other hand, an outer surface of the second part 332 may be coupled to the terminal 40. In more detail, the second part 332 may be inserted into an empty inner space of a terminal connection portion 43 of the terminal 40 described below. As a result, the current collector 30 may be inserted into the terminal 40, and the terminal block 50 may be inserted into the current collector 30. Also, the current collector 30 is inserted upward from below the terminal 40, and the terminal block 50 is inserted downward from above the current collector 30. The terminal 40 is first assembled on the closed surface of the housing 20, the current collector 30 is inserted into the housing 20 to be assembled with the terminal 40, and the terminal block 50 outside the housing 20 is inserted into the current collector 30.

According to this structure, because the current collector 30, the terminal 40, and the terminal block 50 may be welded to each other outside the housing 20, even when spatters are generated during welding, the spatters may not be introduced into the battery, thereby preventing damage to the separator. Also, the issue of battery capacity and lifespan reduction may be solved. Furthermore, according to the above structure of the present disclosure, because the current collector 30, the terminal 40, and the terminal block 50 are welded to each other outside the housing 20, there is no need to insert a welding horn tip into the electrode assembly 10, and thus, a diameter of a hole formed at the winding center C of the electrode assembly 10 may be reduced, thereby increasing the number of windings of the electrode assembly 10 and improving energy density.

Referring to FIG. 3, an injection hole H that is concentric with the second part 332 and has a diameter having the same size as an inner diameter of the second part 332 is formed in the first part 331. A method of manufacturing the battery cell 1 using the current collector 30 may be as follows.

The terminal 40 is processed on the closed portion of the housing 20. The uncoated portion coupling portion 32 of the current collector 30 is coupled to the first uncoated portion 11 of the electrode assembly 10. Another current collector is coupled to the second uncoated portion 12 of the electrode assembly 10. A welding method such as laser welding, resistance welding, or ultrasonic welding may be used for coupling. The electrode assembly 10 is pushed into the housing 20 through the open portion of the housing 20 to assemble the terminal 40 and the current collector 30. The open portion of the housing 20 may be finished with beading and crimping to form a lower end of the battery cell 1 of FIGS. 1 and 2. Next, an electrolyte is injected through the injection hole H. The terminal block 50 is inserted into the terminal coupling portion 33 to block the injection hole H. Next, the current collector 30, the terminal 40, and the terminal block 50 are welded to each other outside the housing 20.

As such, when the current collector 30 and the terminal block 50 are separately configured, an electrolyte may be injected through the injection hole H formed in the current collector 30 and then covered by the terminal block 50 to perform welding outside the housing 20.

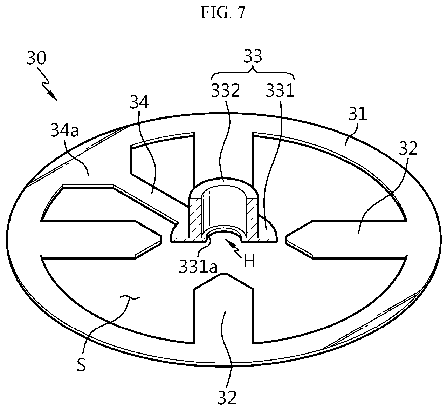

FIG. 7 is a view for describing a current collector according to still another embodiment of the present disclosure. In order to show an internal structure of the terminal coupling portion 33, a cross-section of the terminal coupling portion 33 is shown.

Referring to FIG. 7, the injection hole H that is concentric with the second part 332 and has a diameter smaller than an inner diameter of the second part 332 is formed in the first part 331. In other words, the first part 331 may extend further from an inner wall of the second part 332 toward the inside of the second part 332. Accordingly, the terminal block 50 may be placed and supported on a protrusion of the first part 331. Accordingly, in the current collector 30 of FIG. 7, a support portion 331a on which a bottom surface of the terminal block 50 is seated is formed on a bottom portion of the second part 332.

When the terminal block 50 is coupled to the inside of the current collector 30, the bottom surface of the terminal block 50 may be seated on the support portion 331a. Accordingly, when the terminal block 50 is inserted into an empty space of the terminal coupling portion 33, the terminal block 50 may be fixed at a certain position without moving further downward to a space under the support portion 331a.

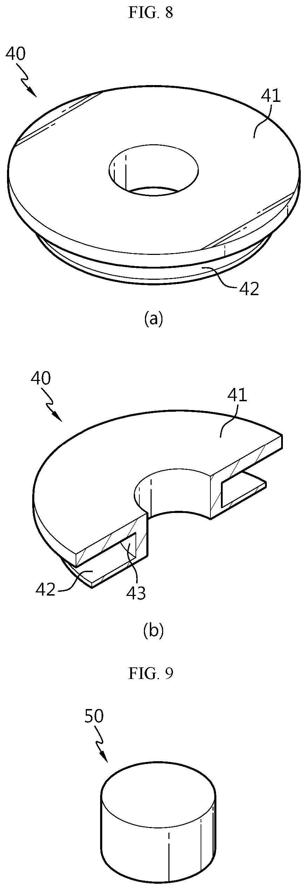

FIG. 8 is a view for describing a terminal according to an embodiment of the present disclosure.

Referring to FIG. 8, the terminal 40 may include a terminal exposed portion 41, a terminal insertion portion 42, and the terminal connection portion 43.

The terminal exposed portion 41 is exposed to the outside of the housing 20. The terminal exposed portion 41 may be located at a substantially central portion of the closed portion of the housing 20. That is, the terminal 40 may pass through the substantially central portion of the closed portion. The terminal exposed portion 41 may have a shape extending substantially parallel to the closed portion.

The terminal insertion portion 42 may have a shape bent toward an inner surface of the closed portion of the housing 20. Accordingly, a maximum width of the terminal insertion portion 42 after a riveting process for fixing the terminal 40 is performed may be greater than a maximum width of a hole formed in the housing 20 through which the terminal insertion portion 42 extends. The terminal insertion portion 42 may have a shape extending substantially parallel to the closed portion. That is, the terminal insertion portion 42 may have a shape extending substantially parallel to the terminal exposed portion 41. However, a shape of the terminal insertion portion 42 is not limited thereto.

Referring to FIGS. 3 and 4, the terminal connection portion 43 may connect the terminal exposed portion 41 to the terminal insertion portion 42. The terminal connection portion 43 may pass through the housing 20. In detail, the terminal connection portion 43 may pass through the closed portion of the housing 20. In more detail, the terminal connection portion 43 may pass through the substantially central portion of the closed portion of the housing 20. The terminal connection portion 43 may extend in a direction substantially parallel to a winding axis of the electrode assembly 10. The terminal exposed portion 41 may be located at one end of the terminal connection portion 43. The terminal exposed portion 41 may extend horizontally from one end of the terminal connection portion 43. The terminal insertion portion 42 may be located at the other end of the terminal connection portion 43. The terminal insertion portion 42 may extend horizontally from the other end of the terminal connection portion 43.

The terminal connection portion 43 may have a substantially pipe shape extending in a direction parallel to the winding axis of the electrode assembly 10. That is, the terminal connection portion 43 may have a hollow pipe shape. In other words, the terminal connection portion 43 may have a cylindrical shape with an empty inner space. However, a shape of the terminal connection portion 43 is not limited thereto, and any hollow shape extending in the winding axis direction may be included in the scope of the present disclosure.

Referring back to FIG. 8 together with FIGS. 3 and 4, the second part 332 of the current collector 30 may be inserted into an empty inner space of the terminal connection portion 43. That is, the terminal connection portion 43 may be coupled to the terminal coupling portion 33 of the current collector 30. An outer diameter of the second part may be less than or equal to an inner diameter of the terminal connection portion 43. That is, in order to insert the second part 332 of the current collector 30 into the empty inner space of the terminal connection portion 43, it is preferable that an outer diameter of the second part 332 is less than or equal to an inner diameter of the terminal connection portion 43.

In one aspect of the present disclosure, referring back to FIGS. 3 and 4, the insulating gasket G2 includes a gasket exposed portion and a gasket insertion portion. The insulating gasket G2 may be provided on the closed portion of the housing 20. The gasket exposed portion is disposed between the terminal exposed portion 41 of the terminal 40 and the housing 20. The gasket exposed portion may extend longer than the terminal exposed portion 41, and thus, may be exposed to the outside of the terminal exposed portion 41 when the cylindrical battery cell 1 is viewed from above. The gasket insertion portion is disposed between the terminal insertion portion 42 of the terminal 40 and the housing 20. The gasket insertion portion may be deformed together during riveting of the terminal insertion portion 42 and may closely attached to an inner surface of the closed portion of the housing 20. The insulating gasket G2 may be formed of, for example, a resin material having insulation and elasticity.

Referring back to FIGS. 3 and 4, the insulator 60 may be provided between the current collector 30 and an inner surface of the housing 20. The insulator 60 prevents contact between the current collector 30 and the housing 20. The insulator 60 may also be disposed between an upper end of an outer circumferential surface of the electrode assembly 10 and the inner surface of the housing 20. That is, the insulator 60 may also be disposed between the first uncoated portion 11 and an inner surface of a side wall portion of the housing 20. This is to prevent contact between an inner circumferential surface of the housing 20 and the first uncoated portion 11 extending toward the closed portion of the housing 20.

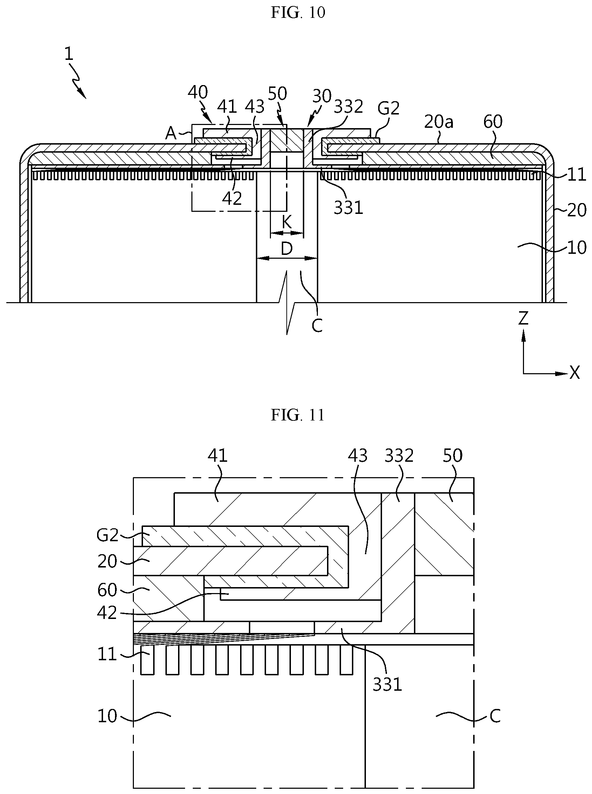

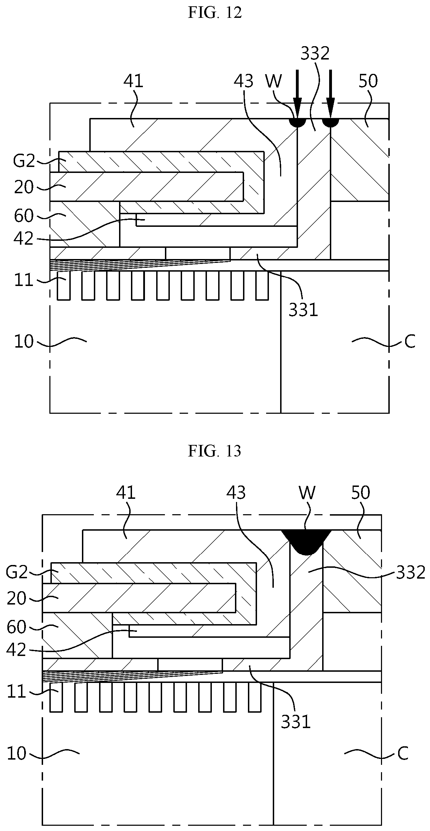

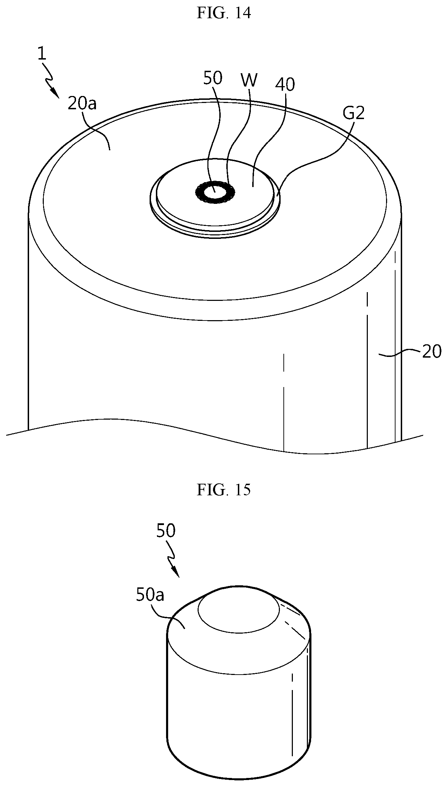

FIG. 9 is a view for describing a terminal block according to an embodiment of the present disclosure. FIG. 10 is an enlarged cross-sectional view illustrating an upper portion of the battery cell of FIG. 1. FIG. 11 is an enlarged view illustrating a part of FIG. 10. FIG. 12 is a view for describing a portion of a battery cell according to an embodiment of the present disclosure to which welding is applied. FIG. 13 is a view for describing a portion of a battery cell according to another embodiment of the present disclosure to which welding is applied. FIG. 14 is a top view of a battery cell for describing a state where welding is performed in the battery cell according to another embodiment of the present disclosure.

Referring to FIGS. 9 to 11, the terminal block 50 may be formed to have a substantially circular plate shape or cylindrical shape. For example, referring to FIG. 10, the terminal block 50 may be formed in a cylindrical shape having a certain diameter K. As described above, the terminal block 50 may be coupled to an inner space of the current collector 30. In more detail, the terminal block 50 may be coupled to an inner space of the terminal coupling portion 33 of the current collector 30. In further more detail, the terminal block 50 may be coupled to an inner space of the second part 332 of the current collector 30. An outer shape of the terminal block 50 may match an inner shape of the second part 332 of the current collector 30. Accordingly, there may be no gap between the terminal block 50 and the current collector 30. The empty inner space of the second part 332 and the injection hole H of the first part 331 may form an opening on one side of the battery cell 1. According to this configuration, the terminal block 50 may effectively block the opening formed on one side of the battery cell 1.

In one aspect of the present disclosure, referring to FIG. 10, a diameter D of a hole formed at the winding center C of the electrode assembly 10 may be less than a certain size. For example, in a structure of a conventional battery cell, a welding horn tip had to be inserted into a hole formed at a winding center of an electrode assembly to weld a current collector and a terminal to each other. In this case, because it is difficult to reduce a diameter of the welding horn tip during welding, a diameter of the hole formed at the winding center of the electrode assembly had to be secured to some extent, and thus, there was a limit to increasing energy density. However, according to the above structure of the present disclosure, because the current collector 30, the terminal 40, and the terminal block 50 are welded to each other outside the housing 20, there is no need to insert a welding horn tip into the hole formed at the winding center C of the electrode assembly, and thus, the diameter D of the hole formed at the winding center C of the electrode assembly 10 may be reduced. Accordingly, the number of windings of the electrode assembly 10 may be increased, and energy density may be improved.

Referring to FIG. 12, the current collector 30 and the terminal 40 and/or the current collector 30 and the terminal block 50 may be coupled to each other by using welding. That is, the current collector 30 and the terminal 40 may be coupled to each other and/or the current collector 30 and the terminal block 50 may be coupled to each other, by using welding. For example, laser welding or ultrasonic welding may be applied to the present disclosure.

Referring to FIG. 12, welding may be applied to a position between the current collector 30 and the terminal 40. Accordingly, the welding bead W may be formed between the current collector 30 and the terminal 40. Welding may be applied between the current collector 30 and the terminal block 50. Accordingly, the welding bead W may be formed between the current collector 30 and the terminal block 50.

As such, because the current collector 30, the terminal 40, and the terminal block 50 are coupled to each other by using welding and the current collector 30, the terminal 40, and the terminal block 50 all include a metal, the current collector 30, the terminal 40, and the terminal block 50 may have the same polarity. For example, the current collector 30, the terminal 40, and the terminal block 50 may have the same polarity as the first electrode. Accordingly, the coupling surface SA (see FIG. 4) where the current collector 30, the terminal 40, and the terminal block 50 are coupled to each other may function as a first electrode terminal.

In another embodiment, referring to FIGS. 13 and 14, welding may be applied to an entire area including the current collector 30, the terminal 40, and the terminal block 50.

For example, welding may be performed twice, that is, once between the terminal 40 and the current collector 30 and once between the current collector 30 and the terminal block 50, or welding may be performed at once. Then, the welding bead W may be formed over the entire area including the current collector 30, the terminal 40, and the terminal block 50.

In particular, according to the present embodiment, because the welding bead W is formed along the second part 332 on the coupling surface SA where the current collector 30, the terminal 40, and the terminal block 50 are coupled to each other, it may be well revealed that welding is performed outside the housing 20. The welding bead W is formed through laser welding. The welding bead W refers to a deposited metal formed by one welding (one laser beam pass) and may be referred to as a welding spot. A size, a shape, a location, and an overlapping degree of the welding bead W may vary according to welding conditions. Examples of a welding method using a laser beam include wobble welding, spot welding, weaving (hatching) welding, and scan welding, and the welding bead W using a wobble method is illustrated in FIG. 14.

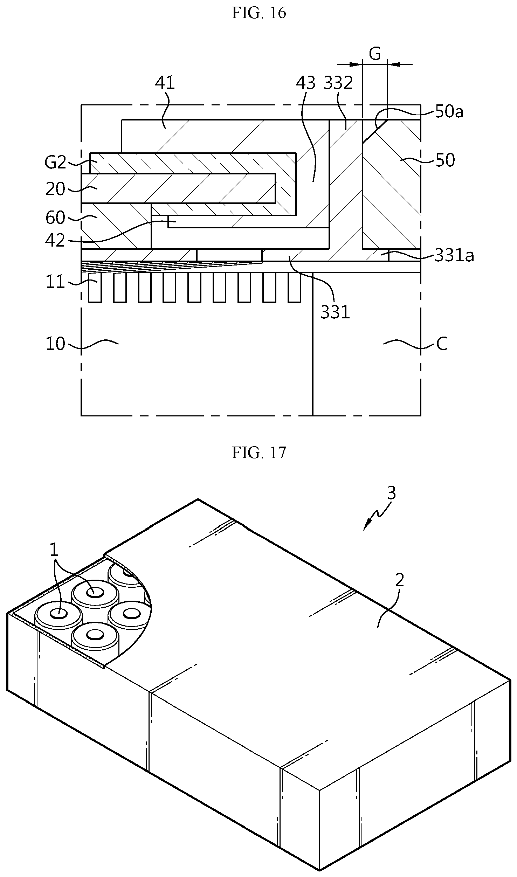

FIG. 15 is a view for describing a terminal block according to another embodiment of the present disclosure. FIG. 16 illustrates a state where the terminal block of FIG. 15 is inserted into a second part of the current collector of FIG. 7.

Referring to FIGS. 15 and 16, the terminal block 50 has a cylindrical shape, and an upper outer circumference is chamfered to form a tapered surface 50a. A bottom surface of the terminal block 50 may be seated on the support portion 331a of the current collector 30.

When the terminal block 50 having this structure is inserted into an inner space of the second part 332, in the terminal block 50, the upper outer circumference has a separation distance G from an inner surface of the second part 332 due to the tapered surface 50a, and a lower portion contacts the inner surface of the second part 332. The separation distance G is the largest on a top surface of the terminal block 50 and decreases downward. In this state, when a laser beam is applied to a boundary portion between the terminal block 50 and the second part 332, the terminal block 50 and the second part 332 located at the boundary portion may be melted by generated heat to form the welding bead W. Because heat remaining at the boundary portion may be transferred to a deeper part of the boundary portion, that is, to a lower part in a longitudinal direction of the second part 332, a depth of the welding bead W may increase and an area where the terminal block 50 and the second part 332 are welded may increase, thereby increasing a coupling force. Also, the welding bead W may be prevented from protruding over the coupling surface SA where the current collector 30, the terminal 40, and the terminal block 50 are coupled to each other. Because the coupling surface SA where the current collector 30, the terminal 40, and the terminal block 50 are coupled to each other may not be uneven, bus bar welding during a module process may be performed without problems.

FIG. 17 is a view for describing a battery pack including the battery cell of FIG. 1.

Referring to FIG. 17, a battery pack 3 according to the present disclosure may include at least one battery cell 1 according to the present disclosure. Also, the battery pack 3 according to the present disclosure may include a pack housing 2 in which the at least one battery cell 1 may be accommodated. In addition, various components, for example, a battery management system (BMS), a pack case, a relay, and a current sensor, which are known at the time of filing the present disclosure, in addition to the battery cell 1 may be further included in the battery pack 3.

The battery pack 3 may include a plurality of battery cells 1. The battery cells 1 may be arranged in a certain number of rows, and the terminal 40 in each battery cell 1 may be used as a first electrode terminal and a remaining portion of the housing 20 may be used as a second electrode terminal. Accordingly, because both positive/negative electrodes may be connected in one direction when electrically connecting the plurality of battery cells 1, an electrical connection structure may be simplified. Accordingly, the number of battery cells 1 that may be mounted in the same space may increase, thereby improving energy density and facilitating an electrical wiring work. Accordingly, because space efficiency is good and electrical wiring efficiency is high, there is a significant work improvement effect in the assembly process of an electric vehicle and the assembly and maintenance of the battery pack 3.

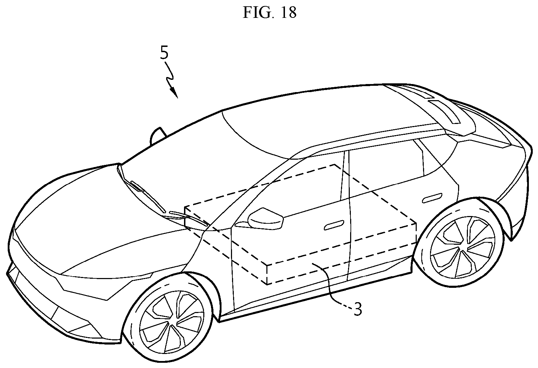

FIG. 18 is a view for describing a vehicle including the battery pack of FIG. 17.

Referring to FIG. 18, a vehicle 5 according to the present disclosure may include at least one battery pack 3 according to the present disclosure.

A battery cell according to the present disclosure may be applied to a vehicle such as an electric vehicle or a hybrid vehicle. That is, the vehicle 5 according to the present disclosure may include the battery cell 1 according to the present disclosure or the battery pack 3 according to the present disclosure. Also, the vehicle 5 according to the present disclosure may include various other components included in a vehicle in addition to the battery cell 1 or the battery pack 3. For example, the vehicle 5 according to the present disclosure may further include a vehicle body, a motor, and a control device such as an electronic control unit (ECU) in addition to the battery cell 1 according to the present disclosure. Examples of the vehicle 5 include a four-wheeled vehicle and a two-wheeled vehicle. The vehicle 5 may operate by receiving power from the battery pack 3 according to an embodiment of the present disclosure.

It will be understood by one of ordinary skill in the art that when terms indicating directions such as upper and lower are used, these terms are only for convenience of explanation and may vary according to a position of a target object, a position of an observer, etc.

Although the embodiments of the present disclosure have been illustrated and described above, the present disclosure is not limited to the above-described specific embodiments. Various modified embodiments may be made by one of ordinary skill in the art without departing from the scope of the present disclosure as claimed in the claims.

### [Description of Reference Signs]

5: vehicle
3: battery pack
2: pack housing
1: battery cell
10: electrode assembly
11: first uncoated portion
12: second uncoated portion
C: winding center
20: housing
20a: outer surface
30: current collector
31: edge portion
32: uncoated portion coupling portion
33: terminal coupling portion
331: first part
332: second part
34: connection portion
34a: tapered portion
40: terminal
41: terminal exposed portion
42: terminal insertion portion
43 terminal connection portion
50: terminal block
G2: insulating gasket
60: insulator

## Claims

1. A battery cell comprising:
an electrode assembly in which a first electrode, a second electrode, and a separator disposed between the first electrode and the second electrode are wound around a winding axis to define a core and an outer circumferential surface, the first electrode comprising a first uncoated portion that is not coated with an active material layer along a winding direction;
a housing comprising an open portion on one side and configured to accommodate the electrode assembly through the open portion;
a current collector comprising an edge portion disposed on the electrode assembly, an uncoated portion coupling portion extending inward from the edge portion and coupled to the first uncoated portion, and a terminal coupling portion spaced apart from the uncoated portion coupling portion, located at a central portion, and exposed to outside of the housing;
a terminal extending through a closed portion of the housing located opposite to the open portion to be exposed to outside of the housing, and coupled to the terminal coupling portion; and
a terminal block configured to be coupled to an inner side of the current collector.

2. The battery cell according to claim 1, wherein the current collector, the terminal, and the terminal block are configured to be welded to each other outside the housing.

3. The battery cell according to claim 2, wherein a coupling surface where the current collector, the terminal, and the terminal block are coupled to each other constitutes a flat portion parallel to the closed portion of the housing.

4. The battery cell according to claim 1, wherein the terminal coupling portion comprises:
a first part extending parallel to the closed portion; and
a second part extending perpendicular to the first part from the first part toward the outside of the housing.

5. The battery cell according to claim 4, wherein the second part extends in a direction parallel to a direction of the winding axis of the electrode assembly.

6. The battery cell according to claim 4, wherein the second part has a hollow pipe shape.

7. The battery cell according to claim 6, wherein an injection hole concentric with the second part and having a diameter less than or equal to an inner diameter of the second part is formed in the first part.

8. The battery cell according to claim 6, wherein a support portion on which a bottom surface of the terminal block is seated is formed on a bottom portion of the second part.

9. The battery cell according to claim 4, wherein an outer diameter of the terminal block is same as an inner diameter of the second part.

10. The battery cell according to claim 4, wherein the terminal block has a cylindrical shape and has an upper outer circumference chamfered to form a tapered surface.

11. The battery cell according to claim 4, wherein a welding bead is formed along the second part on a coupling surface where the current collector, the terminal, and the terminal block are coupled to each other.

12. The battery cell according to claim 1, wherein the terminal extends through a central portion of the closed portion.

13. The battery cell according to claim 4, wherein the terminal comprises:
a terminal exposed portion exposed to the outside of the housing;
a terminal insertion portion extending through the closed portion of the housing and located inside the housing; and
a terminal connection portion connecting the terminal exposed portion to the terminal insertion portion and extending through the housing.

14. The battery cell according to claim 13, wherein the terminal connection portion has a hollow pipe shape.

15. The battery cell according to claim 13, wherein an outer diameter of the second part is less than or equal to an inner diameter of the terminal connection portion.

16. The battery cell according to claim 13, comprising an insulating gasket provided on the closed portion of the housing and disposed between the housing and the terminal.

17. The battery cell according to claim 16, wherein the insulating gasket comprises:
a gasket exposed portion disposed between the terminal exposed portion and the housing; and
a gasket insertion portion disposed between the terminal insertion portion and the housing.

18. A battery pack comprising at least one battery cell according to any one of claims 1 to 17.

19. A vehicle comprising at least one battery pack according to claim 18.
